# EUROPÄISCHE PATENTSCHRIFT

(11) **EP 4 063 169 B1**
(45) Veröffentlichungstag und Bekanntmachung des Hinweises auf die Patenterteilung: **18.06.2025**
(21) Anmeldenummer: 22161571.9
(22) Anmeldetag: 11.03.2022
(51) Int. Cl.: B60L 3/00, B60L 58/20, B60L 15/00, B60L 15/20, B60L 58/21

(54) **FAHRZEUGTRAKTIONSSYSTEM**
VEHICLE TRACTION SYSTEM
SYSTÈME DE TRACTION DU VÉHICULE

(30) Priorität: 26.03.2021 DE 102021203026
(43) Veröffentlichungstag der Anmeldung: 28.09.2022
(73) Patentinhaber: Siemens Mobility GmbH, 81739 München (DE)
(72) Erfinder: Ruppert, Swen, 91096 Möhrendorf (DE)
(74) Vertreter: Siemens Patent Attorneys

(56) Entgegenhaltungen:
- EP-A1- 2 189 320
- EP-A1- 2 570 292
- EP-A1- 3 000 646
- EP-A2- 0 780 959
- EP-A2- 2 913 217
- DE-A1- 102004 033 379
- DE-A1- 102006 043 941
- JP-A- 2001 145 201
- JP-A- 2001 320 804
- JP-A- S62 225 197
- CHRISTINE ROSS ET AL: "Turboelectric Distributed Propulsion Protection System Design Trades", SAE 2010 COMMERCIAL VEHICLE ENGINEERING CONGRESS SAE TECHNICAL PAPERS, vol. 1, 16 September 2014 (2014-09-16), US, XP055425021, ISSN: 0148-7191, DOI: 10.4271/2014-01-2141

## Beschreibung

Die Erfindung betrifft ein Antriebssystem für ein Fahrzeug, insbesondere für ein Schienenfahrzeug.

Schienenfahrzeuge werden überwiegend mit elektrischer Energie aus der Oberleitung versorgt. Da dies für manche Strecken nicht möglich ist, kann hier ein Dieselantrieb zum Einsatz kommen. Dies ist jedoch aufgrund der Schadstoff- und Partikelemission unerwünscht, so dass stattdessen Traktionsbatterien zum Einsatz kommen. Hybride Fahrzeug-Traktionssysteme **z.B.** für Bahnen ermöglichen die Nutzung elektrischer Energie aus der Oberleitung oder alternativ aus einer Traktionsbatterie.

Wegen der hohen erforderlichen Leistungen verwenden batteriebasierte Traktionssysteme üblicherweise Spannungen im Mittelspannungs (MV, Medium Voltage) -Bereich. Dies macht es erforderlich, dass das üblicherweise im Niedrigspannungs (LV, Low Voltage) -Bereich liegende Batteriespannungsniveau an den Zwischenkreis des Traktionssystems angepasst werden muss.

Ein Schienenfahrzeug, welches nicht ein solches hybrides Fahrzeug-Traktionssystem aufweist, ist in der JP2001145201A beschrieben. Dieses verfügt über ein Steuerungsleistungsversorgungssystem, welches im Falle eines Stromausfalls in der Oberleitung mittels elektrischer Speichervorrichtungen Gleichstromlasten wie zum Beispiel eine Betriebsschutzvorrichtung und eine Bremssteuervorrichtung versorgt.

Der Erfindung liegt die Aufgabe zugrunde, ein verbessertes Antriebssystem für ein Fahrzeug aufzuzeigen.

Diese Aufgabe wird durch ein Antriebssystem mit den Merkmalen des Anspruchs 1 gelöst. Ferner sind Gegenstand der Erfindung vorteilhafte Verwendungen des Antriebssystems.

Das erfindungsgemäße Antriebssystem für ein Fahrzeug umfasst ein erstes Teilsystem mit einem ersten elektrischen Energiespeicher und einem ersten Gleichstromzwischenkreis, sowie ein zweites Teilsystem mit einem zweiten elektrischen Energiespeicher und einem zweiten Gleichstromzwischenkreis. Jeder Gleichstromzwischenkreis versorgt jeweils mindestens einen Motor. Der erste Gleichstromzwischenkreis ist über einen Batteriesteller derart an den ersten Energiespeicher angeschlossen, dass das Spannungsniveau des ersten Gleichstromzwischenkreises höher als dasjenige des ersten Energiespeichers ist, und das Spannungsniveau des zweiten Gleichstromzwischenkreises ist gleich dem des zweiten Energiespeichers.

Das Antriebssystem eignet sich besonders für größere Schienenfahrzeuge wie Züge. Es kann aber auch für andere größere Antriebe verwendet werden, z.B. bei Mining Fahrzeugen, oder auch bei stationären industriellen Anwendungen.

Der Antrieb erfolgt - zumindest u.a., d.h. zusätzlich können auch andere Arten der Energieversorgung vorgesehen sein - mittels elektrischer Energiespeicher. Bei diesen handelt es sich vorzugsweise um Akkumulatoren, also aufladbare Batterien, die Energie in elektrochemischer Form speichern.

Das Antriebssystem ist zweigeteilt in ein erstes und ein zweites Teilsystem. Beide haben jeweils einen Gleichstromzwischenkreis, von welchem aus einer oder mehrere Motoren mit elektrischer Energie versorgt werden. Die Anbindung der Motoren an die Gleichstromzwischenkreise kann in herkömmlicher Weise mittels Umrichtern erfolgen. Das Spannungsniveau der beiden Gleichstromzwischenkreise unterscheidet sich voneinander. Dies wird dadurch ermöglicht, dass das erste Teilsystem über einen Batteriesteller verfügt, welcher sich zwischen dem ersten Energiespeicher und dem Gleichstromzwischenkreis des ersten Teilsystems befindet, welcher bei dem zweiten Teilsystem nicht erforderlich ist. Bei dem Batteriesteller handelt es sich vorzugsweise um einen DC/DC-Wandler, also einen Gleichspannungswandler.

Es ist somit ein leistungsstärkeres und ein leistungsschwächeres Antriebsteilsystem vorhanden. Dies ermöglicht es, die Vorteile beider Teilsysteme in einem Antriebssystem zu kombinieren. Das erste Teilsystem kann zwar eine höhere Leistung zur Verfügung stellen als das zweite Teilsystem; dies geht jedoch mit einem höheren Aufwand an hierfür erforderlichen Komponenten einher. Im Vergleich zu einem Antriebssystem mit zwei leistungsstarken Teilsystemen wird also Geld, Platz und Gewicht eingespart. Im Vergleich zu einem Antriebssystem mit zwei leistungsschwachen Teilsystemen, welches sich z.B. für Fahrzeugtypen wie Straßenbahnen eignet, kann das erfindungsgemäße Antriebssystem eine deutlich höhere Leistung abgeben und eignet sich daher für andere Einsatzgebiete.

Vorzugsweise ist das Spannungsniveau des ersten Gleichstromzwischenkreises eine Mittelspannung, und das Spannungsniveau des zweiten Gleichstromzwischenkreises eine Niederspannung. Als Niederspannung bezeichnet man hierbei Gleichspannungen bis 1500 Volt, und Mittelspannung ab 1500 Volt.

Die beiden elektrischen Energiespeicher stellen vorzugsweise jeweils Niederspannung zur Verfügung. Hierbei kann die Dimensionierung der beiden Energiespeicher gleich sein, oder auch voneinander abweichen. So kann z.B. der Energiespeicher des ersten Teilsystems eine höhere Spannung zur Verfügung stellen als derjenige des zweiten Teilsystems.

Bei Einsatz des Antriebssystems in einem Schienenfahrzeug kann der erste Gleichstromzwischenkreis einen ersten Motor eines ersten Triebdrehgestells und einen ersten Motor eines zweiten Triebdrehgestells versorgen, und der zweite Gleichstromzwischenkreis einen zweiten Motor des ersten Triebdrehgestells und einen zweiten Motor des zweiten Triebdrehgestells. Hierdurch kann eine gleichverteilte Leistungsabgabe an die beiden Triebdrehgestelle ermöglicht werden.

Besonders vorteilhaft ist es, wenn das erste Teilsystem außer den bereits genannten Komponenten ferner eine Filterdrossel und einen Bremssteller aufweist, und das zweite Teilsystem keinen Batteriesteller, keine Filterdrossel, und vorzugsweise auch keinen Bremssteller aufweist. Dies ermöglicht eine einfachere, günstigere und platzsparendere Ausgestaltung des zweiten Teilsystems im Vergleich zum ersten Teilsystem.

In Weiterbildung der Erfindung ist eine Schaltungsanordnung vorgesehen, mit welcher zum Antrieb des Fahrzeugs der zweite Gleichstromzwischenkreis wahlweise an den ersten oder den zweiten elektrischen Energiespeicher anschließbar ist, und gleichzeitig der erste Gleichstromzwischenkreis über den Batteriesteller an den jeweils anderen elektrischen Energiespeicher. Dies entspricht der Möglichkeit des Wechselns der Zuständigkeiten der Energiespeicher für die Energieversorgung der beiden Teilsysteme. Durch Umschalten zwischen den Zuständigkeiten kann eine gleiche oder ähnliche Entladung der beiden Energiespeicher erzielt werden. Alternativ ist es auch möglich, dass entweder der erste oder der zweite Gleichstromzwischenkreis sowohl an den ersten als auch an den zweiten elektrischen Energiespeicher anschließbar ist. Dies ermöglicht eine höhere Leistungsabgabe durch denjenigen Gleichstromzwischenkreis, welcher gleichzeitig von beiden Energiespeichern versorgt wird. Ferner ist es alternativ möglich, dass gleichzeitig beide Gleichstromzwischenkreise, also der erste Gleichstromzwischenkreis über den Batteriesteller und der zweite Gleichstromzwischenkreis, an beide Energiespeicher anschließbar sind. Letzteres ist eine Situation, in der beide Energiespeicher parallel beide Teilsysteme betreiben.

Diese Schaltungsanordnung ermöglicht den folgenden Betrieb des erfindungsgemäßen Antriebssystems:
- beim anfänglichen Beschleunigen des Fahrzeugs vom Stillstand oder annäherndem Stillstand aus erfolgt die Leistungsabgabe an den oder die Motoren durch das erste und das zweite Teilsystem, vorzugsweise in gleichem oder annähernd gleichem Maße,
   und/oder
- beim weiteren Beschleunigen nach der anfänglichen Beschleunigung des Fahrzeugs erfolgt die Leistungsabgabe an den oder die Motoren in größerem Maße durch das erste Teilsystem,
   und/oder
- beim Fahren des Fahrzeugs mit konstanter Geschwindigkeit oder bei kleiner Leistungsabgabe erfolgt diese Leistungsabgabe an den oder die Motoren ausschließlich oder annähernd ausschließlich durch das zweite Teilsystem.

Alternativ oder zusätzlich zur für den Antrieb des Fahrzeugs beschriebenen Schaltungsanordnung kann auch eine Schaltungsanordnung zum Aufladen der beiden elektrischen Energiespeicher vorhanden sein, mit welcher wahlweise die folgenden vier Zustände einstellbar sind:
1) es wird nur der erste elektrische Energiespeicher aufgeladen, d.h. das Aufladen des ersten Energiespeichers erfolgt gleichzeitig über den ersten und den zweiten Gleichstromzwischenkreis, oder
2) es wird nur der zweite elektrische Energiespeicher aufgeladen, d.h. das Aufladen des zweiten Energiespeichers erfolgt gleichzeitig über den ersten und den zweiten Gleichstromzwischenkreis, oder
3) jeder Gleichstromzwischenkreis ist für das Aufladen eines Energiespeichers zuständig, d.h. der erste elektrische Energiespeicher wird über den ersten Gleichstromzwischenkreis und gleichzeitig der zweite elektrische Energiespeicher über den zweiten Gleichstromzwischenkreis aufgeladen, oder umgekehrt, oder
4) beide Gleichstromzwischenkreise sind gleichzeitig für das Aufladen beider Energiespeicher zuständig, d.h. der erste und der zweite elektrische Energiespeicher werden gleichzeitig über den ersten und den zweiten Gleichstromzwischenkreis aufgeladen.

Diese Schaltungsanordnung ermöglicht den folgenden bevorzugten Betrieb des erfindungsgemäßen Antriebssystems:
- zunächst wird in einem ersten Schritt der erste elektrische Energiespeicher über den ersten Gleichstromzwischenkreis und gleichzeitig der zweite elektrische Energiespeicher über den zweiten Gleichstromzwischenkreis aufgeladen, oder umgekehrt,
- danach wird in einem optionalen zweiten Schritt nur einer der elektrischen Energiespeicher aufgeladen, also entweder der erste oder der zweite elektrische Energiespeicher gleichzeitig über den ersten und den zweiten Gleichstromzwischenkreis, und schließlich
- werden in einem dritten Schritt der erste und der zweite elektrische Energiespeicher gleichzeitig über den ersten und den zweiten Gleichstromzwischenkreis aufgeladen.

Alternativ kann auch folgendermaßen vorgegangen werden:
- in einem ersten Schritt wird nur einer der elektrischen Energiespeicher aufgeladen, also entweder der erste oder der zweite elektrische Energiespeicher gleichzeitig über den ersten und den zweiten Gleichstromzwischenkreis, und danach
- werden in einem zweiten Schritt der erste und der zweite elektrische Energiespeicher gleichzeitig über den ersten und den zweiten Gleichstromzwischenkreis aufgeladen.

Im Folgenden wird die Erfindung anhand eines Ausführungsbeispiels näher erläutert. Dabei zeigen:
- Figur 1:: ein Schienenfahrzeug,
- Figur 2:: ein Traktionssystem nach dem Stand der Technik,
- Figur 3:: ein Traktionssystem gemäß eines Ausführungsbeispiels der Erfindung,
- Figur 4:: eine schematische Darstellung des Traktionssystems der Figur 3,
- Figuren 5a, b:: eine kreuzweise Anbindung von Traktionsteilsystemen an Batterien,
- Figur 6:: einen zeitlichen Verlauf von Zugkraft und Leistung eines Traktionssystems,
- Figur 7:: eine Anbindung von Traktionsteilsystemen an Batterien,
- Figuren 8a bis 8d:: verschiedene Aufladesituationen.

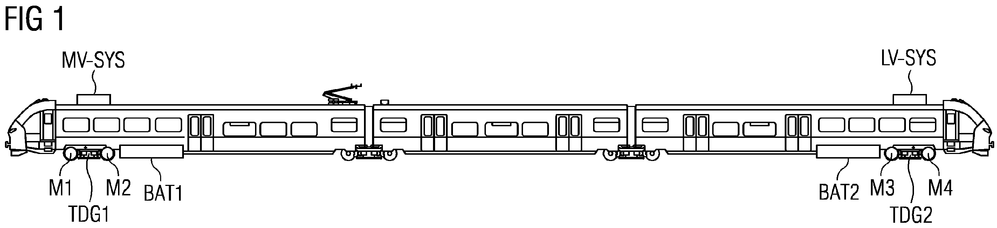

Figur 1 zeigt ein Schienenfahrzeug mit zwei mechanischen Traktionsantriebsteilen in Form von Triebdrehgestellen TDG1 und TDG2. Am vorderen Triebdrehgestell TDG1 befinden sich die beiden Motoren M1 und M2, am hinteren Triebdrehgestell TDG2 die beiden Motoren M3 und M4, welche dem Antrieb der jeweiligen Radsätze dienen. Das Schienenfahrzeug, z.B. eine Bahn, verfügt über ein hybrides Fahrzeug-Traktionssystem. Dies bedeutet, dass das Schienenfahrzeug einerseits über Strom von der Oberleitung mit elektrischer Energie versorgt werden kann, und andererseits von Traktionsbatterien. Hierzu befindet sich in der Nähe des Triebdrehgestells TDG1 die Traktionsbatterie BAT1, und in der Nähe des Triebdrehgestells TDG2 die Traktionsbatterie BAT2.

Die Verwendung von batterieangetriebenen Zügen ist vorteilhaft, da sie Dieselfahrzeuge ersetzen können, welche ansonsten auf nicht elektrifizierten Strecken zum Einsatz kommen. Hierdurch wird der unerwünschte Schadstoffausstoß von Dieselfahrzeugen vermieden. Die elektrische Traktion mittels Batterie weist ähnliche Eigenschaften wie die Dieseltraktion auf, nämlich eine hohe Zugkraft bei eher geringer Leistung. Dies entspricht der Möglichkeit einer hohen Beschleunigung und dem Fahren mit nicht allzu hoher konstanter Geschwindigkeit nach Abschluss der Beschleunigung. Diese Anforderung wird an viele Regionalzüge gestellt, welche entlegene nicht elektrifizierte Strecken befahren, auf welchen keine hohen Geschwindigkeiten möglich sind.

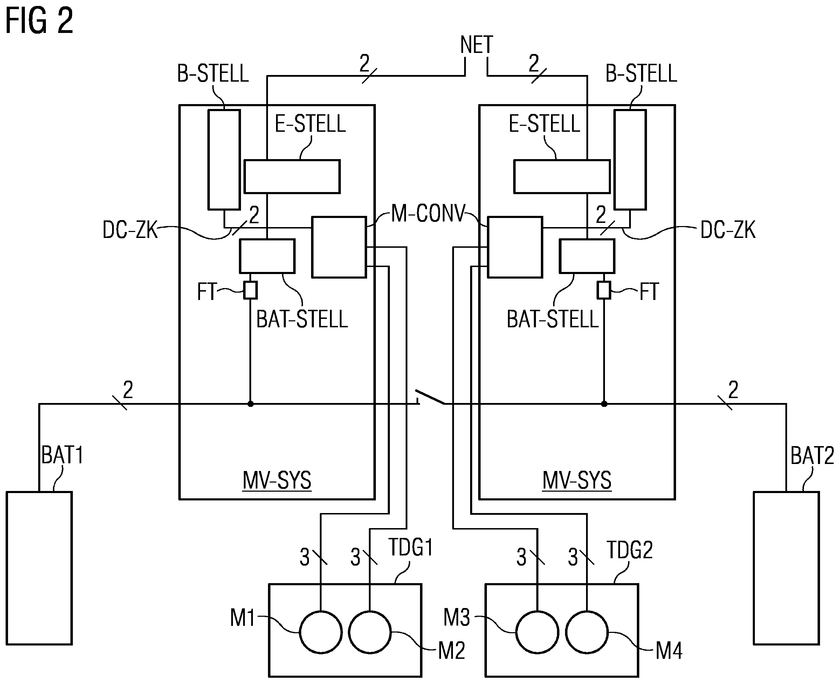

Figur 2 zeigt schematisch ein Traktionssystem für solch ein Schienenfahrzeug nach dem Stand der Technik. Das Versorgungsnetz, welches auf Gleichstrom DC oder Wechselstrom AC basieren kann, sowie der Stromabnehmer und die zugehörigen Komponenten des Schienenfahrzeugs sind zusammenfassend mit NET bezeichnet. Das Bahnnetz kann z.B. auf einem Spannungsniveau von 15 oder 25 kV betrieben werden, welches der Transformator des Schienenfahrzeugs auf die Zwischenkreisspannung heruntersetzt.

Zur Erhöhung der Übersichtlichkeit wurde sowohl in Figur 2 als auch in den folgenden Figuren die Single-line Diagramm oder Einliniendiagramm Darstellung gewählt. Bei dieser Darstellung werden mehrere Stromleitungen als einzelne Linie dargestellt, so sind z.B. die drei Leitungen, mit welchen die Motoren versorgt werden, durch eine einzelne Linie ersetzt.

Die Traktionsbatteriesysteme BAT 1 und BAT 2 haben üblicherweise ein Spannungsniveau von kleiner als 1000V. Dies wird durch eine Reihenschaltung von 2-3 V Zellen erreicht. Diese Einzelzellen werden also so gestackt, dass die Ausgangsspannung der Traktionsbatteriesysteme BAT 1 und BAT 2 jeweils im LV (Low Voltage)-Bereich liegt. Da der LV-Normbereich, welcher bis maximal 1.5 kV reicht, sich aus Service- und Sicherheitszwecken - dies korreliert z.B. mit der Anforderung an das für Service und Reparatur benötigte Fachpersonal und die erforderliche Isolationsklasse - für Batterien eignet, wird diese Dimensionierung der Traktionsbatterien bevorzugt.

Anstelle der Traktionsbatteriesysteme BAT 1 und BAT 2 können auch andersartige Energiespeicher zum Einsatz kommen. In Betracht kommen z.B. Hochleistungskondensatoren.

Das hybride Fahrzeug-Traktionssystem der Figur 2, welches sich insbesondere für Bahnen, aber auch für größere Fahrzeuge wie spezielle Trucks, z.B. im Bergbau eingesetzte Kipplader eignet, umfasst zwei Mittelspannungssysteme MV-SYS. Beide weisen jeweils einen DC-Zwischenkreis DC-ZK auf, deren Spannungen z.B. 2 kV betragen. Diese gegenüber der Batteriespannung höhere Spannung ist erforderlich, um wegen den hohen erforderlichen Leistungen keine allzu hohe Ströme auftreten zu lassen. Daher wird das Batteriespannungsniveau, welches wie beschrieben im Niederspannungsbereich liegt, an den Zwischenkreis DC-ZK des Traktionsteilsystems angepasst. Dieses Hochstellen der von den Batterien BAT1 bzw. BAT2 zur Verfügung gestellten Gleichspannung erfolgt mittels des Batteriestellers BAT-STELL. Hierbei handelt es sich üblicherweise um einen DC/DC-Converter, über welchen der Zwischenkreis DC-ZK des Antriebs an die Batterie BAT1 bzw. BAT2 angebunden wird.

Weiterer Bestandteil der Mittelspannungssysteme MV-SYS sind die Filterdrosseln mit Glättungskondensator FT zur Glättung der Stromwelligkeit, die im Zusammenhang mit dem Batteriesteller BAT-STELL notwendig sind, sowie die Bremssteller B-STELL, welche der Vernichtung überschüssiger Energie z.B. bei Übergangsvorgängen oder beim Bremsvorgang dienen, die Eingangssteller E-STELL, wie z.B. 4 Quadrantensteller, welche die vom Stromabnehmer gelieferte Einspeisespannung auf das Spannungsniveau des DC-Zwischenkreis DC-ZK bringt, sowie die Motorumrichter M-CONV wie z.B. PWR (Pulswechselrichter), welche die von den Motoren benötigte Wechselspannung zur Verfügung stellen.

Es sind gemäß dem Stand der Technik zwei identische Traktionsteilsysteme in Form der beiden MV Systeme MV-SYS vorhanden. Hierbei versorgt das linke der beiden Systeme die beiden Motoren M1 und M2 eines Triebdrehgestells, und das rechte der beiden Systeme die beiden Motoren M3 und M4 eines anderen Triebdrehgestells. Die beiden MV Systeme MV-SYS können gemeinsam die Traktion des Schienenfahrzeugs übernehmen, und im Fehlerfall reicht eines der beiden hierfür aus.

Weitere nicht für das Verständnis der Erfindung relevante Komponenten, wie z.B. Saugkreisdrossel, Eingangsfilter, Zwischenkreiskapazitäten, sind aus Gründen der Übersichtlichkeit nicht in Figur 2 und den folgenden Figuren enthalten.

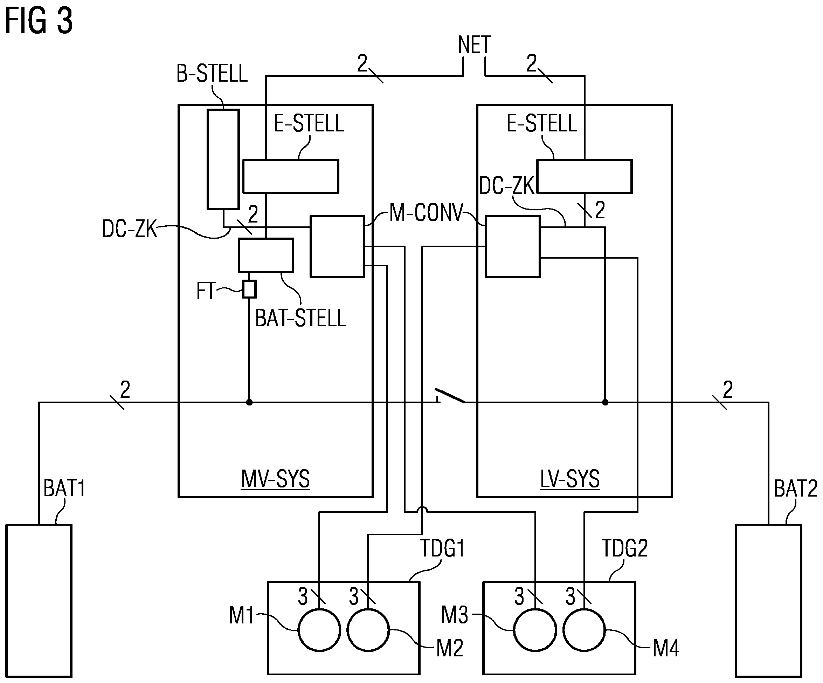

Figur 3 zeigt ein Ausführungsbeispiel der Erfindung. Gleiche Komponenten sind genauso wie in Figur 2 bezeichnet. Im Unterschied zu Figur 2 ist als zweites Traktionsteilsystem kein MV-System, sondern das LV-System LV-SYS vorhanden. Im Vergleich zum MV-System MV-SYS kann das LV-System LV-SYS nur niedrigere Leistungen zur Verfügung stellen. Diese niedrigeren Leistungen ermöglichen es, den Zwischenkreis DC-ZK des LV-Systems LV-SYS auf dem Spannungsniveau der Batterie BAT2 zu betreiben. Beispielsweise kann der Zwischenkreis DC-ZK des LV-Systems LV-SYS mit 0.8 kV betrieben werden, während das Spannungsniveau des Zwischenkreises DC-ZK des MV-Systems MV-SYS auf 2 kV liegt. Hierdurch kann der im MV-System MV-SYS wie zu Figur 2 erläutert notwendige Batteriesteller BAT-STELL mit dem Filterelement FT bei dem LV-System LV-SYS entfallen. Der Batteriesteller BAT-STELL ist üblicherweise ein teures Bauteil, welches zudem beim Betrieb mit Verlusten an elektrischer Energie von ca. bis zu 3% bei jeder Energiewandlung einhergeht. Außerdem muss für den Batteriesteller BAT-STELL mit dem Filterelement FT Platz vorgesehen werden, und sie erhöhen das Gesamtgewicht und tragen daher indirekt negativ zur Erhöhung der Beschleunigungsmasse und des Fahrwiderstandes bei. Ferner ist auch der Bremssteller B-STELL nicht erforderlich. Die durch das Nichtbenötigen der genannten Komponenten eingesparten Bauteilkosten belaufen sich in der Größenordnung des Motorumrichters M-CONV.

Wie bereits ausgeführt, wird das Low Voltage System LV-SYS nicht mit den gleichen Leistungen betrieben wie das Medium Voltage System MV-SYS. Denn aufgrund der niedrigeren Spannung des Zwischenkreis DC-ZK des LV-Systems LV-SYS würden sonst zu hohe Ströme fließen. Auf diese Weise können die Komponenten beider Traktionsteilsysteme für die gleiche maximale Stromstärke ausgelegt sein, z.B. für 500 oder 700 A. Jedoch können die Komponenten des LV-Systems LV-SYS für niedrigere Spannungen ausgelegt sein, weshalb sie technisch einfacher und kostengünstiger sein können als diejenigen des MV-Systems MV-SYS.

In Figur 3 sind das LV-System LV-SYS und das MV-System MV-SYS so an die Traktionsmotoren angebunden, dass in jedem Triebdrehgestell jeweils ein Motor von dem MV-System MV-SYS und ein anderer Motor von dem LV-System LV-SYS gespeist wird. Dies hat den Vorteil, dass die Zugkraft und die Leistung in jedem der beiden Triebdrehgestelle gleich ist.

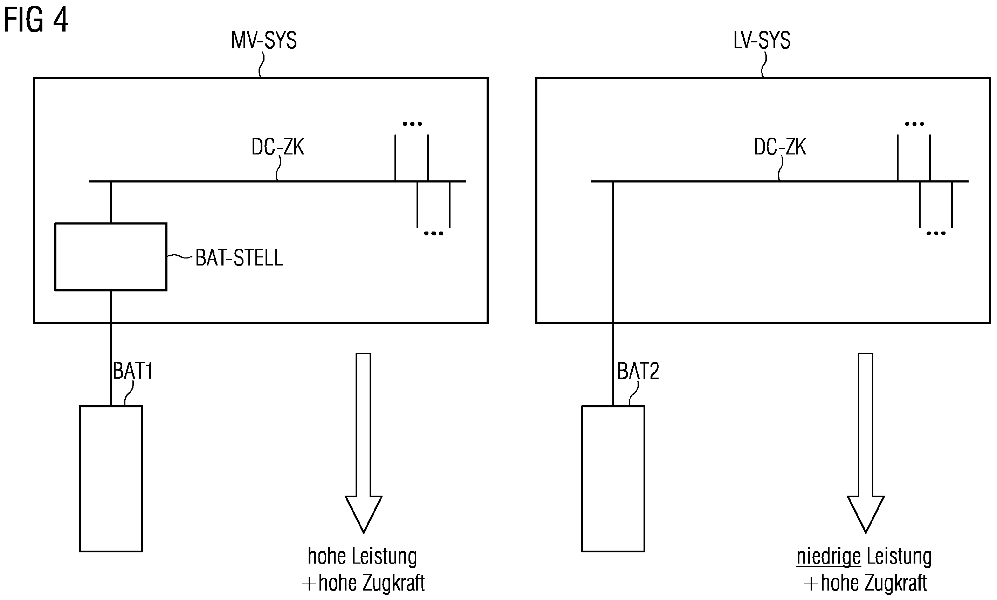

Das Traktionssystem der Figur 3 ist schematisch in Figur 4 wiedergegeben. Es ist somit eine Kombination eines LV-Systems LV-SYS und eines MV-Systems MV-SYS als Antrieb für ein Schienenfahrzeug vorgesehen. Beide Teilsysteme können beim Anfahren eine ähnlich hohe Zugkraft aufbringen, z.B. 75 KN pro Motor, aber unterschiedlich hohe Leistungen, z.B. 0.5 MW pro Motor für das Fahren mit dem MV-System MV-SYS, und 0.3 MW pro Motor für das Fahren mit dem LV-System LV-SYS.

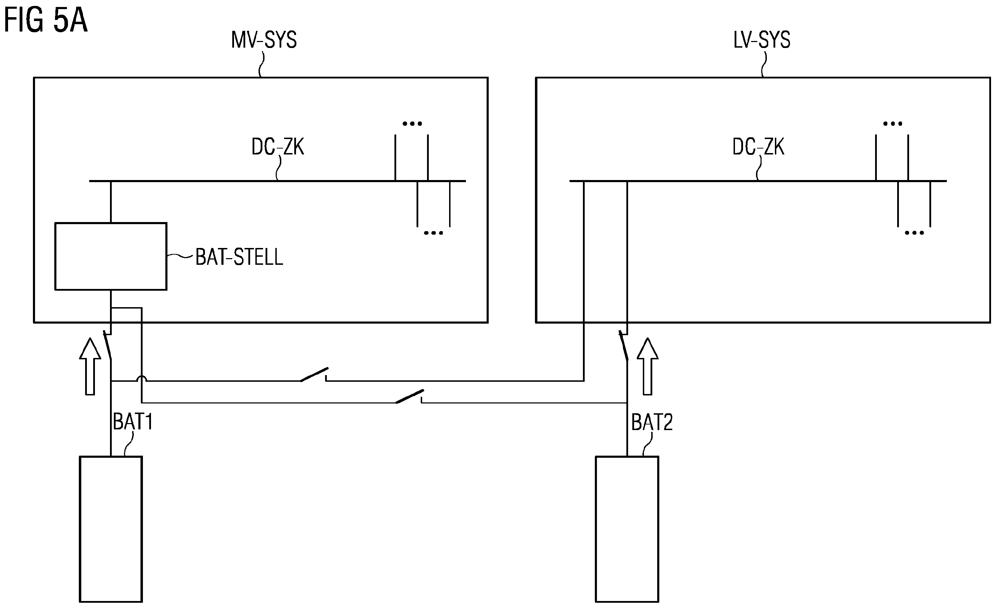

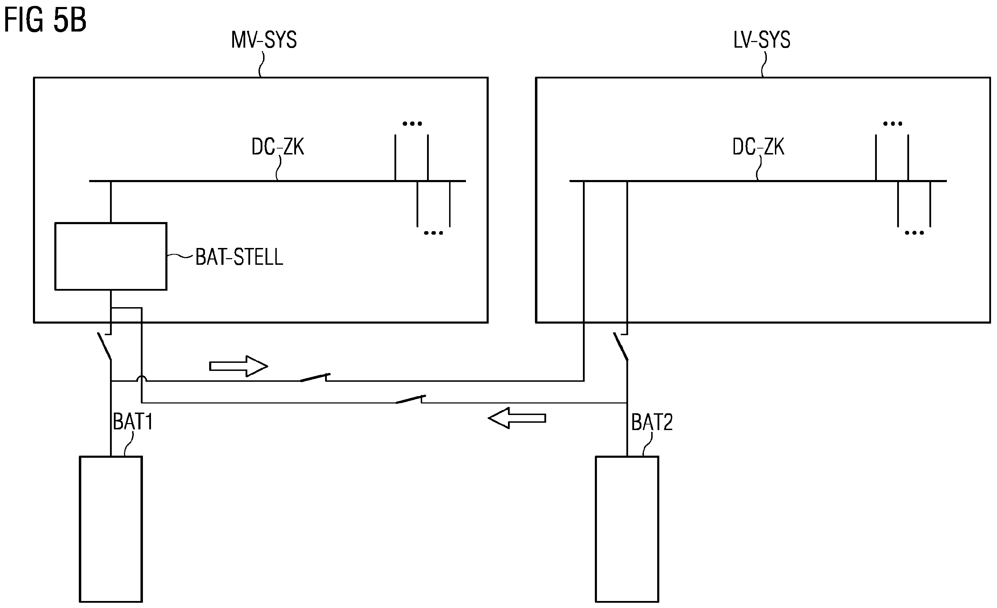

Die dem LV-System LV-SYS und dem MV-System MV-SYS zugeordneten Energiespeicher BAT1 und BAT2 können unterschiedlich groß dimensioniert werden, so dass sie dem unterschiedlichen Energiebedarf der Traktionsteilsysteme entsprechen. Alternativ oder zusätzlich können die Batterien BAT1 und BAT2 zeitlich wechselnd den beiden Traktionsteilsystemen LV-SYS und MV-SYS zugeordnet werden, indem kreuzweise Verbindungen zwischen den Systemen vorhanden sind. Dies ist in den beiden Prinzipbildern der Figur 5 dargestellt:

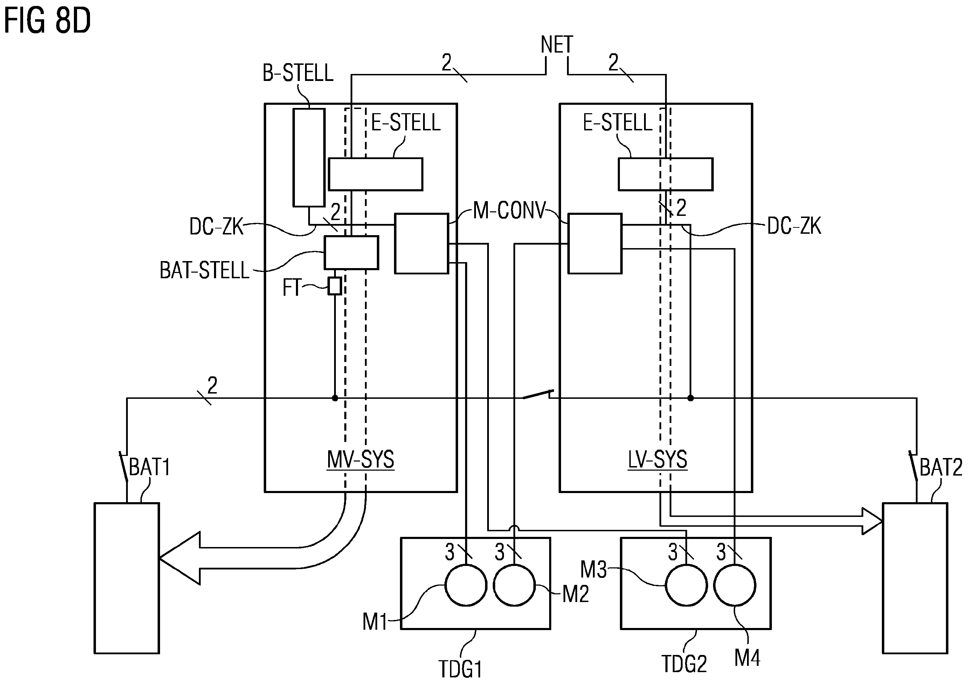

In Figur 5a sind die Schalter, welche die kreuzweise Anbindung der Batterien BAT1 und BAT2 an die beiden Traktionsteilsysteme LV-SYS und MV-SYS ermöglichen, geöffnet. Auf diese Weise versorgt jede Batterie BAT1 bzw. BAT2 das ihr zugeordnete System, also die Batterie BAT1 das MV-System MV-SYS und die Batterie BAT2 das LV-System LV-SYS. In Figur 5b hingegen sind diese Schalter geschlossen. Auf diese Weise versorgt jede Batterie BAT1 bzw. BAT2 das jeweils andere System, also die Batterie BAT2 das MV-System MV-SYS und die Batterie BAT1 das LV-System LV-SYS. Diese Ausgestaltung gemäß Figur 5 ermöglicht eine gleichmäßige Entladung der beiden Energiespeicher BAT1 und BAT2. Es ist auch möglich, in den Figuren 5a und 5b alle Schalter zu schließen. In diesem Fall betreiben beide Batterien BAT1 und BAT2 parallel beide Systeme; dies entspricht der Aufladesituation, welche später zu Figur 8d erläutert wird.

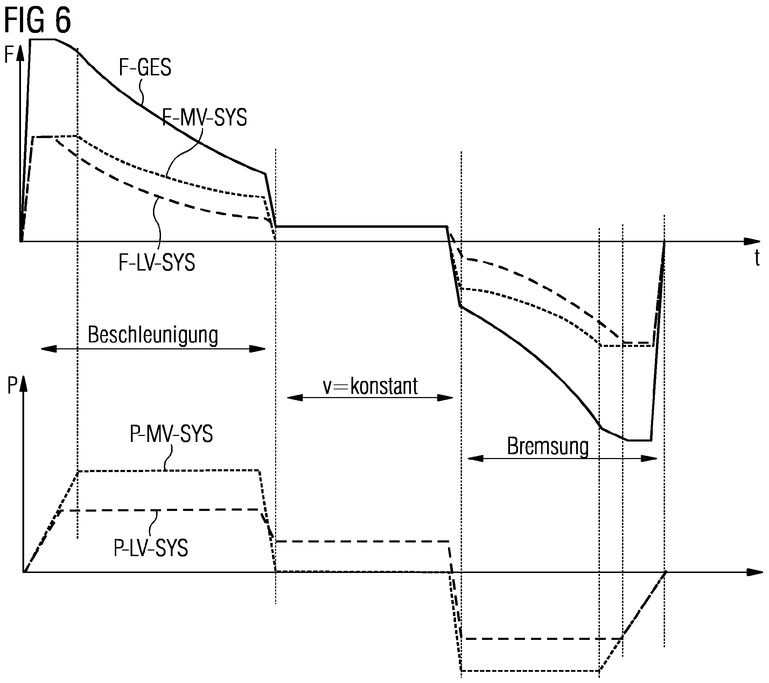

Figur 6 zeigt ein Beispiel für den zeitlichen Verlauf von Zugkraft F und Leistung P. In der ersten Phase findet hierbei eine Beschleunigung des Schienenfahrzeugs statt, in der zweiten ein Fahren mit konstanter Geschwindigkeit, und in der dritten ein Abbremsen bis zum Stillstand des Schienenfahrzeugs. Hierbei zeigt die Linie F-LV-SYS die vom LV-System bewirkte Zugkraft, die Linie F-MV-SYS die vom MV-System bewirkte Zugkraft, und die Linie F-GES die Gesamtzugkraft, welche der Summe der beiden Zugkräfte F-LV-SYS und F-MV-SYS von LV-System und MV-System entspricht. Ferner zeigt die Linie P-LV-SYS die vom LV-System abgegebene oder aufgenommene Leistung, und die Linie P-MV-SYS die vom MV-System abgegebene oder aufgenommene Leistung.

Bezüglich der Aufteilung der Zugkraft in eine Bereitstellung durch das LV-System und das MV-System ist zu sehen, dass beim Anfahren die hohe Zugkraft bei niedrigen Geschwindigkeiten von beiden Systemen zur Verfügung gestellt wird. Sobald das Maximum der abgebbaren Leistung erreicht ist, an dem horizontalen Verlauf der Leistungskurven während der Beschleunigungsphase zu erkennen, wird das Schienenfahrzeug mit dieser maximalen Leistung weiter beschleunigt. Entsprechendes gilt für die Leistungsaufnahme beim Abbremsvorgang. Beim Fahren mit konstanter Geschwindigkeit kann die Leistung und Zugkraft ausschließlich das das LV-System zur Verfügung gestellt werden, um die Energieabgabe der Batterien auszugleichen. Es ist also vorgesehen, die hohe Zugkraft bei niedrigen Geschwindigkeiten mit dem LV-System und dem MV-System gemeinsam zur Verfügung zu stellen, dann den Traktionsbedarf bei hohen Leistungen bei der weiteren Beschleunigung überwiegend mit dem MV-System, und beim Fahren mit konstanter Geschwindigkeit nur oder hauptsächlich mit dem LV-System zu decken. Beim Fahren mit konstanter Geschwindigkeit ist weder eine hohe Zugkraft, noch eine hohe Leistung erforderlich, so dass hierfür das LV-System alleine ausreicht. Im Teillastbereich kann also das LV-System stärker belastet werden, so dass sich unterschiedliche Energielevel (State of Charge) der Batterien aufgrund der größeren Leistungsabgabe bei der Beschleunigung durch das MV-System ausgleichen. Denn im vorhergehenden Volllastbereich hat das MV-System mehr geleistet als das LV-System, so dass dessen Batterie stärker entleert wurde.

Bei der "Beharrungsfahrt" kann auch anders als oben beschrieben vorgegangen werden. Diese Fahrt entspricht dem Fahren mit konstanter Geschwindigkeit, oder im allgemeinen dem Fahren mit kleinen Leistungen, bei denen nicht die hohe Zugkraft wie beim Beschleunigen erforderlich ist; das muss nicht notwendigerweise eine Fahrt mit konstanter Geschwindigkeit sein, sondern trifft auch zu bei leichtem Beschleunigen oder auch starkem Beschleunigen bergabwärts. In diesem Fall des Fahrens mit Teillast kann es zwar wie oben beschrieben vorteilhaft sein, den Traktionsbedarf möglichst nur mit dem LV-System zu decken, da diesem die Verlustbringer wie Batteriesteller BAT-STELL und Filterelement FT bei Speisung aus dem Energiespeicher fehlen. Dieser Unterschied ist aber bei einer Fahrt mit Speisung aus dem Netz nicht gegeben. Außerdem kann berücksichtigt werden, ob das LV-System oder das MV-System am Teillastpunkt den besseren Wirkungsgrad hat. Ferner können auch andere Kriterien eine Rolle spielen, welche eine andere Aufteilung der Beanspruchung von LV-System oder MV-System bei der Beharrungsfahrt rechtfertigen, wie z.B. (spontane) thermische Unterschiede. Die Nutzung von hauptsächlich oder ausschließlich dem LV-System bei der Teillastfahrt ist daher nur eine mögliche Option, welche insbesondere zur Batterienivellierung, also dem Ausgleich der Ladezustände der Batterien eingesetzt werden kann.

Da das MV-System in der Beschleunigungsphase eine deutlich höhere Leistung abgibt als das LV-System, ist es vorteilhaft, die an das MV-System angeschlossenen Motoren leistungsstärker auszulegen als die von dem LV-System versorgten.

Bei der Aufteilung von Zugkraft und Leistung gemäß Figur 6 handelt es sich um ein Beispiel. Abweichende Aufteilungen sind möglich. Insbesondere eignet sich die Aufteilung gemäß Figur 6 für den Fall, dass die Batterien des MV-Systems und des LV-Systems gleich ausgelegt und aufgeladen sind. Dementsprechend kann bei einer Abweichung von der Aufteilung der Figur 6 der Ladezustand der Batterien von LV-System und MV-System berücksichtigt werden.

Im Folgenden wird der Aufladevorgang näher erläutert.

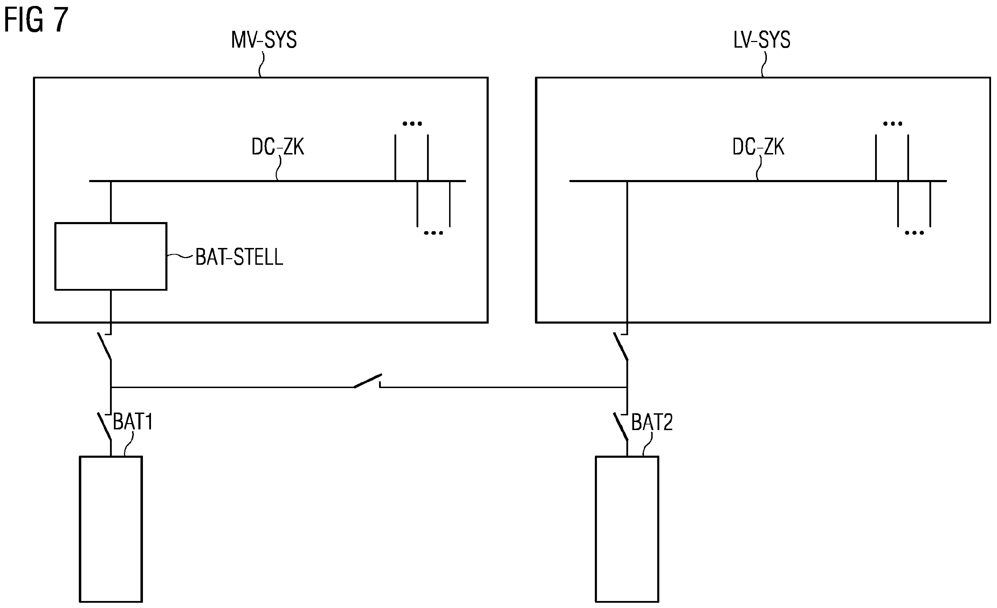

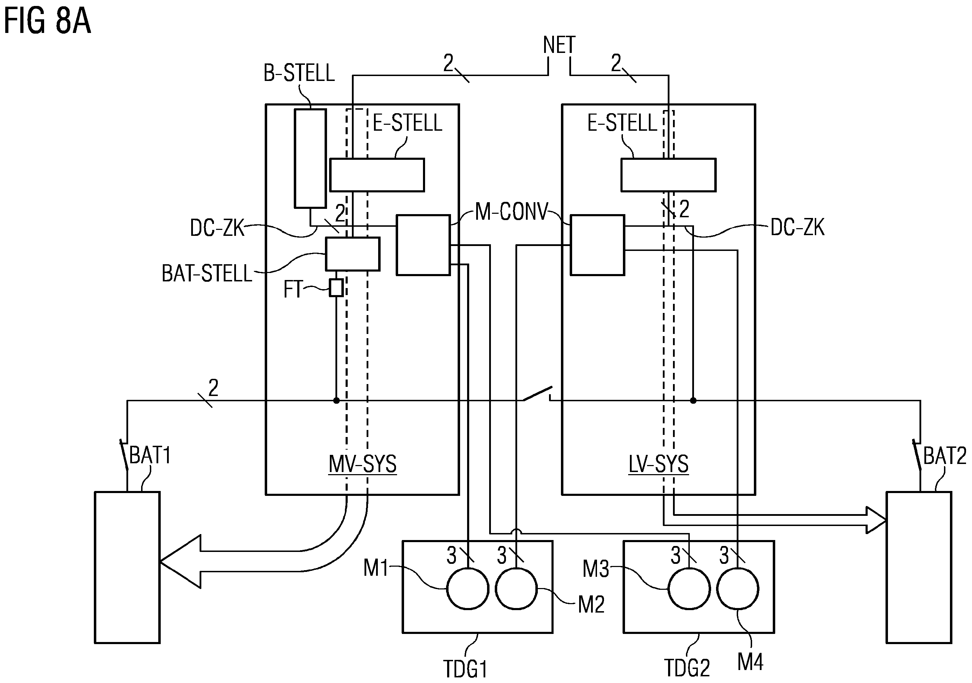

Wie mit dem Verschaltungsprinzip der Figur 7 gezeigt, kann eine Umverteilung der Energiespeicher auch nur für den Aufladevorgang erfolgen. Diese Verschaltung eignet sich für den Fall, dass nicht genügend Kreuzverbindungen in Form von Stromschienen oder Kabeln zwischen den Traktionsteilsystemen möglich oder sinnvoll sind. Bei dieser einfachen Verschaltung gemäß Figur 7 ist es daher nicht möglich, eine gleichzeitige kreuzweise Anbindung beider Energiespeicher an das jeweils andere Traktionsteilsystem zu bewirken. Die verschiedenen mit dem Verschaltungsprinzip der Figur 7 möglichen Schaltzustände zu Zwecken der Aufladung sind in den Figuren 8a bis 8d gezeigt.

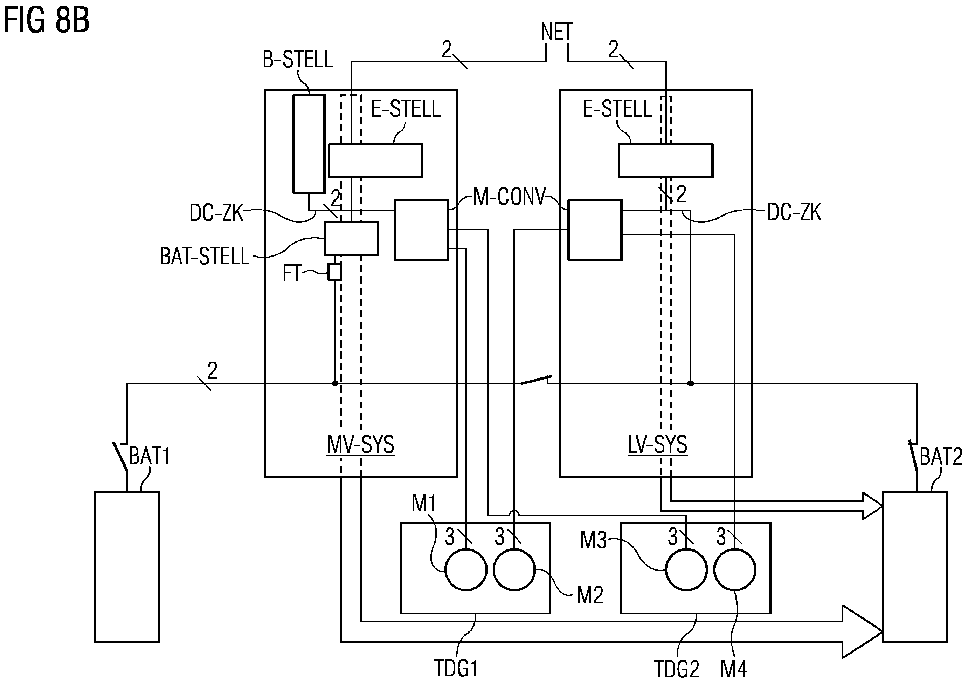

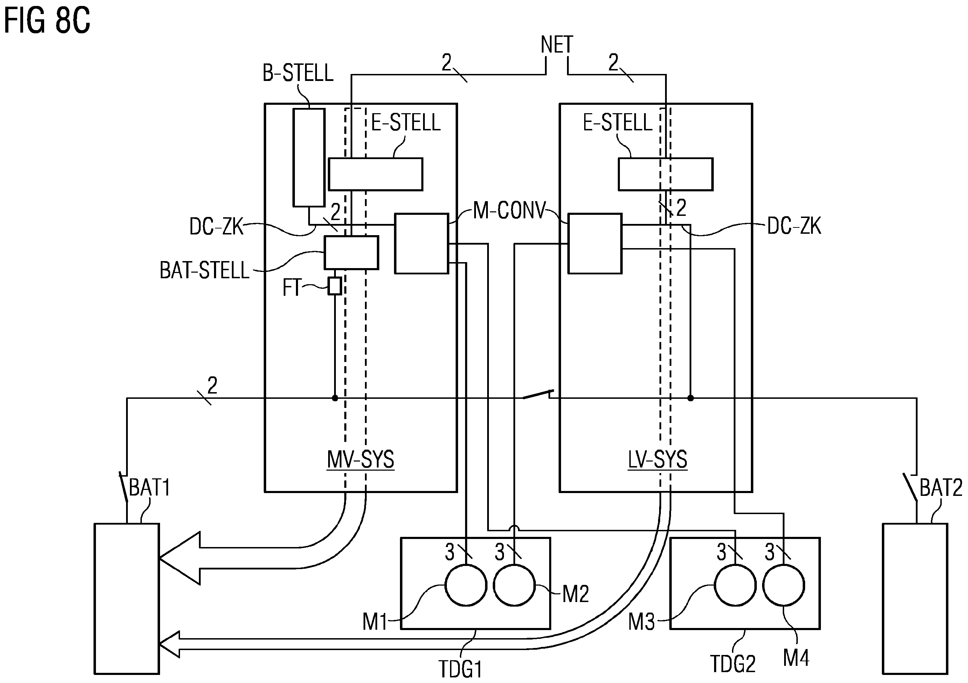

Alternativ zu Figur 7 kann auch für die Zuordnung von Batterien zu Traktionsteilsystemen die aufwendigere Verschaltung gemäß Figur 5 verwendet werden. Dies - nicht in Figur 8 dargestellt - ermöglicht eine gleichzeitige kreuzweise Anbindung beider Energiespeicher an das jeweils andere Traktionsteilsystem. Von Vorteil kann dies z.B. sein, wenn die Batterie BAT2 mehr Energie benötigt als die Batterie BAT1, so dass eine Aufladung der Batterie BAT2 durch das eine höhere Einspeisungsleistung bewirkende MV-System MV-SYS und eine Aufladung der Batterie BAT1 durch das eine niedrigere Einspeisungsleistung bewirkende LV-System LV-SYS vorgenommen werden kann.

Die Figuren 8a, 8b, 8c und 8d zeigen vier verschiedene Aufladesituationen mit unterschiedlichen Leistungsbereitstellung. Das MV-System MV-SYS ermöglicht gegenüber dem LV-System LV-SYS ein schnelleres Aufladen der Batterie, z.B. mit einer Leistung von 1 MW bei dem MV-System MV-SYS gegenüber 0.6 MW bei dem LV-System LV-SYS. Diese unterschiedlich hohe Leistungsaufnahme ist in Figur 8 durch die unterschiedlich dicken Pfeile symbolisiert, die zu den Batterien führen.

Figur 8a zeigt den Fall, dass durch das MV-System MV-SYS die ihm zugeordnete Batterie BAT 1 aufgeladen wird, und gleichzeitig durch das LV-System LV-SYS die ihm zugeordnete Batterie BAT 2. Figur 8b zeigt den Fall, dass sowohl das MV-System MV-SYS als auch das LV-System LV-SYS die dem LV-System LV-SYS zugeordnete Batterie BAT 2 aufladen, und Figur 8c zeigt den Fall, dass sowohl das MV-System MV-SYS als auch das LV-System LV-SYS die dem MV-System MV-SYS zugeordnete Batterie BAT 1 aufladen.

Gemäß Figur 8b kann der dem LV-System LV-SYS zugeordnete Energiespeicher BAT 2 mit der kleineren Leistung des LV-Ladesystems zeitweise auch vom stärkeren MV-System MV-SYS geladen werden und damit mehr Energie zugeführt werden als es dem Verhältnis der Dimensionierungen der beiden Ladeeinrichtungen (MV / LV) entspricht. Dies wird durch gesteuertes Zuschalten bzw. Wegschalten der Batterien zu den Teiltraktionssystemen erreicht. Umgekehrt kann, wie in Figur 8c dargestellt, das Batteriesystem BAT1 im Falle, dass es mehr Ladeenergie benötigt, durch das LV-System LV-SYS mitgeladen werden. Die Figuren 8b und 8c zeigen, wie die Energieniveaus der Batteriesysteme BAT1 und BAT2 angeglichen werden können. Dies dient der Vorbereitung der in Figur 8d gezeigten Konstellation. Alternativ zum Spannungsniveauausgleich bieten die Figu-ren 8b und 8c die Möglichkeit, eines der Batteriesysteme BAT1 oder BAT2 möglichst schnell voll zu laden.

Sind die Spannungen der beiden Batteriesysteme angeglichen, ist es gemäß Figur 8d auch möglich, beide Batterien gleichzeitig zu laden, ohne die beiden Traktionsteilsysteme MV-SYS und LV-SYS mittels des Schalters voneinander zu trennen. Diese paritätische Aufladungsverteilung kann generell nur durchgeführt werden, wenn ohnehin oder durch vorangehende Aufladephasen die Spannungen der beiden Batteriesysteme BAT1 und BAT2 einheitlich sind. Die Gesamtaufladeleistung in der Konstellation der Figur 8d wird durch die Steuerung des Batteriestellers BAT-STELL des MV-Systems MV-SYS und dem Eingangssteller E-STELL des LV-Systems LV-SYS eingestellt.

Die flexible Zuordnung zwischen Batterien und Aufladesystemen ist von Vorteil, da die Unterschiedlichkeit der beiden Traktionsteilsysteme MV-SYS und LV-SYS ein unterschiedliches Verhalten bzgl. der Batterieentladung mit sich bringt. Wären hingegen zwei MV-Systeme oder zwei LV-Systeme vorhanden, wäre diese unterschiedliche Batterieentladung nicht in großem Ausmaß gegeben. Die Unterschiedlichkeit kann auch dadurch bedingt sein, dass die beiden Batterien nicht gleich ausgelegt sind.

Grundsätzlich ist es erstrebenswert, eine möglichst schnelle Aufladung aller Batteriepacks zu erreichen. Da es i.d.R. nicht erwünscht ist, dass allzu hohe Ströme fließen, ist prinzipiell eine gleichmäßige Verteilung der Ladeleistung auf die Batterien sinnvoll. Daher erweist sich eine vom aktuellen Ladezustand der Batterien abhängige Zuordnung zu den Ladeeinrichtungen als vorteilhaft. Eine rasche Aufladung beider Batterien kann z.B. dadurch erreicht werden, dass zunächst gemäß Figur 8a beide Batterien gleichzeitig aufgeladen werden. Zur Angleichung der Spannungsniveaus der Batterien oder zur Schnellladung einer Batterie können die Batterien auch einzeln gemäß Figur 8b oder Figur 8c geladen werden.

Sobald die Batteriespannungen angeglichen sind, ist auch eine gleichmäßige Ladung gemäß Figur 8d möglich. Nach dem vollständigen Aufladen von einer der beiden Batterien kann die verbleibende noch nicht vollständig aufgeladene Batterie gemäß Figur 8b oder 8c aufgeladen wird. Alternativ können die Batterien auch generell nicht parallel, sondern nacheinander aufgeladen werden, also zunächst gemäß Figur 8b und im Anschluss gemäß Figur 8c oder umgekehrt.

Wie in den Figuren 5 und 7 gezeigt, ist eine verschiedene Aufteilung oder Zuordnung von Batterien zu Traktionsteilsystemen sowohl bei der Leistungsabgabe durch die Batterien, als auch beim Aufladen der Batterien möglich. Ein Schalten zwischen den verschiedenen Zuordnungen sollte stromlos oder annähernd stromlos erfolgen, z.B. beim Aufenthalt in einem Bahnhof.

Die Erfindung wurde voranstehend an einem Ausführungsbeispiel beschrieben. Es versteht sich, dass zahlreiche Änderungen und Modifikationen möglich sind, ohne dass der Rahmen der Erfindung , die bei den Ansprüchen definiert ist, verlassen wird.

## Patentansprüche

1. Antriebssystem für ein Fahrzeug, umfassend ein erstes Teilsystem (MV-SYS) mit einem ersten elektrischen Energiespeicher (BAT1) und einem ersten Gleichstromzwischenkreis (DC-ZK),
ein zweites Teilsystem (LV-SYS) mit einem zweiten elektrischen Energiespeicher (BAT2) und einem zweiten Gleichstromzwischenkreis (DC-ZK),
wobei jeder Gleichstromzwischenkreis (DC-ZK) jeweils mindestens einen Traktionsmotor (M1, M2, M3, M4) versorgt, wobei die Anbindung der Motoren an die Gleichstromzwischenkreise mittels Umrichtern erfolgt,
wobei das Spannungsniveau der beiden Gleichstromzwischenkreise (DC-ZK) sich voneinander unterscheidet und das erste Teilsystem (MV-SYS) eine höhere Leistung zur Verfügung stellen kann als das zweite Teilsystem (LV-SYS), wobei der erste Gleichstromzwischenkreis (DC-ZK) über einen Batteriesteller (BAT-STELL) derart an den ersten Energiespeicher (BAT1) angeschlossen ist, dass das Spannungsniveau des ersten Gleichstromzwischenkreises (DC-ZK) höher als dasjenige des ersten Energiespeichers (BAT1) ist,
und das Spannungsniveau des zweiten Gleichstromzwischenkreises (DC-ZK) gleich dem des zweiten Energiespeichers (BAT2) ist.

2. Antriebssystem nach Anspruch 1, bei dem
das Spannungsniveau des ersten Gleichstromzwischenkreises (DC-ZK) einer Mittelspannung, und das Spannungsniveau des zweiten Gleichstromzwischenkreises (DC-ZK) einer Niederspannung entspricht.

3. Antriebssystem nach einem der Ansprüche 1 bis 2, bei dem der erste (BAT1) und der zweite (BAT2) elektrische Energiespeicher jeweils Niederspannung zur Verfügung stellt.

4. Antriebssystem nach einem der Ansprüche 1 bis 3, bei dem der erste Gleichstromzwischenkreis (DC-ZK) einen ersten Traktionsmotor (M1) eines ersten Triebdrehgestells (TGD1) und einen ersten Traktionsmotor (M3) eines zweiten Triebdrehgestells (TGD2) eines Schienenfahrzeugs versorgt, und der zweite Gleichstromzwischenkreis (DC-ZK) einen zweiten Traktionsmotor (M2) des ersten Triebdrehgestells (TGD1) und einen zweiten Traktionsmotor (M4) des zweiten Triebdrehgestells (TGD2) versorgt.

5. Antriebssystem nach einem der Ansprüche 1 bis 4, wobei das erste Teilsystem (MV-SYS) umfasst: eine Filterdrossel (FT) und einen Bremssteller (B-STELL), und
das zweite Teilsystem (LV-SYS) nicht umfasst: einen Batteriesteller (BAT-STELL) und eine Filterdrossel (FT).

6. Antriebssystem nach einem der Ansprüche 1 bis 5, mit einer Schaltungsanordnung, mit welcher zum Antrieb des Fahrzeugs der zweite Gleichstromzwischenkreis (DC-ZK) wahlweise an den ersten (BAT1) oder den zweiten (BAT2) elektrischen Energiespeicher anschließbar ist, und gleichzeitig der erste Gleichstromzwischenkreis (DC-ZK) über den Batteriesteller (BAT-STELL) an den jeweils anderen elektrischen Energiespeicher (BAT1, BAT2) anschließbar ist.

7. Antriebssystem nach einem der Ansprüche 1 bis 5, mit einer Schaltungsanordnung, mit welcher zum Antrieb des Fahrzeugs alternativ
der zweite Gleichstromzwischenkreis (DC-ZK) gleichzeitig an den ersten (BAT1) und den zweiten (BAT2) elektrischen Energiespeicher anschließbar ist, oder
der erste Gleichstromzwischenkreis (DC-ZK) über den Batteriesteller (BAT-STELL) gleichzeitig an den ersten (BAT1) und den zweiten (BAT2) elektrischen Energiespeicher anschließbar ist, oder
gleichzeitig der erste Gleichstromzwischenkreis (DC-ZK) über den Batteriesteller (BAT-STELL) und der zweite Gleichstromzwischenkreis (DC-ZK) an den ersten (BAT1) und den zweiten (BAT2) elektrischen Energiespeicher anschließbar ist.

8. Antriebssystem nach einem der Ansprüche 1 bis 7, mit einer Schaltungsanordnung, mit welcher zum Aufladen der beiden elektrischen Energiespeicher (BAT1, BAT2) wahlweise
- der erste elektrische Energiespeicher (BAT1) gleichzeitig über den ersten Gleichstromzwischenkreis (DC-ZK) und den zweiten Gleichstromzwischenkreis (DC-ZK) aufgeladen wird, oder
- der zweite elektrische Energiespeicher (BAT2) gleichzeitig über den ersten Gleichstromzwischenkreis (DC-ZK) und den zweiten Gleichstromzwischenkreis (DC-ZK) aufgeladen wird, oder
- der erste elektrische Energiespeicher (BAT1) über den ersten Gleichstromzwischenkreis (DC-ZK) und gleichzeitig der zweite elektrische Energiespeicher (BAT2) über den zweiten Gleichstromzwischenkreis (DC-ZK) aufgeladen werden, oder
- der erste elektrische Energiespeicher (BAT1) über den zweiten Gleichstromzwischenkreis (DC-ZK) und gleichzeitig der zweite elektrische Energiespeicher (BAT2) über den ersten Gleichstromzwischenkreis (DC-ZK) aufgeladen werden, oder
- der erste und der zweite elektrische Energiespeicher (BAT1, BAT2) gleichzeitig über den ersten und den zweiten Gleichstromzwischenkreis (DC-ZK) aufgeladen werden.

9. Verwendung eines Antriebssystems nach Anspruch 8, wobei
- zunächst der erste elektrische Energiespeicher (BAT1) über den ersten Gleichstromzwischenkreis (DC-ZK) und gleichzeitig der zweite elektrische Energiespeicher (BAT2) über den zweiten Gleichstromzwischenkreis (DC-ZK) aufgeladen wird,
- optional dann der erste (BAT1) oder der zweite (BAT2) elektrische Energiespeicher gleichzeitig über den ersten Gleichstromzwischenkreis (DC-ZK) und den zweiten Gleichstromzwischenkreis (DC-ZK) aufgeladen wird, und
- danach der erste und der zweite elektrische Energiespeicher (BAT1, BAT2) gleichzeitig über den ersten und den zweiten Gleichstromzwischenkreis (DC-ZK) aufgeladen werden.

10. Verwendung eines Antriebssystems nach Anspruch 8, wobei
- zunächst der erste (BAT1) oder der zweite (BAT2) elektrische Energiespeicher gleichzeitig über den ersten Gleichstromzwischenkreis (DC-ZK) und den zweiten Gleichstromzwischenkreis (DC-ZK) aufgeladen wird, und
- danach der erste und der zweite elektrische Energiespeicher (BAT1, BAT2) gleichzeitig über den ersten und den zweiten Gleichstromzwischenkreis (DC-ZK) aufgeladen werden.

11. Verwendung eines Antriebssystems nach einem der Ansprüche 1 bis 8, wobei
beim anfänglichen Beschleunigen des Fahrzeugs die Leistungsabgabe an den oder die Traktionsmotoren (M1, M2, M3, M4) durch das erste (MV-SYS) und das zweite (LV-SYS) Teilsystem erfolgt,
und/oder
beim weiteren Beschleunigen des Fahrzeugs die Leistungsabgabe an den oder die Traktionsmotoren (M1, M2, M3, M4) in größerem Maße durch das erste Teilsystem (MV-SYS) erfolgt,
und/oder
beim Fahren des Fahrzeugs mit konstanter Geschwindigkeit oder bei kleiner Leistungsabgabe diese Leistungsabgabe an den oder die Traktionsmotoren (M1, M2, M3, M4) ausschließlich durch das zweite Teilsystem (LV-SYS) erfolgt.

## Claims

1. Drive system for a vehicle, comprising
a first subsystem (MV-SYS) having a first electrical energy store (BAT1) and a first DC link (DC-ZK),
a second subsystem (LV-SYS) having a second electrical energy store (BAT2) and a second DC link (DC-ZK),
wherein each DC link (DC-ZK) respectively supplies power to at least one traction motor (M1, M2, M3, M4),
wherein the motors are connected to the DC links by means of converters,
wherein the voltage level of the two DC links (DC-ZK) differs from one to the other and the first subsystem (MV-SYS) can provide a higher power than the second subsystem (LV-SYS),
wherein the first DC link (DC-ZK) is connected to the first energy store (BAT1) via a battery actuator (BAT-STELL) in such a way that the voltage level of the first DC link (DC-ZK) is higher than that of the first energy store (BAT1),
and the voltage level of the second DC link (DC-ZK) is equal to that of the second energy store (BAT2).

2. Drive system according to Claim 1, in which
the voltage level of the first DC link (DC-ZK) corresponds to a medium voltage, and the voltage level of the second DC link (DC-ZK) corresponds to a low voltage.

3. Drive system according to either of Claims 1 and 2, in which the first (BAT1) and second (BAT2) electrical energy stores each provide low voltage.

4. Drive system according to one of Claims 1 to 3, in which the first DC link (DC-ZK) supplies power to a first traction motor (M1) of a first drive bogie (TGD1) and to a first traction motor (M3) of a second drive bogie (TGD2) of a rail vehicle, and the second DC link (DC-ZK) supplies power to a second traction motor (M2) of the first drive bogie (TGD1) and to a second traction motor (M4) of the second drive bogie (TGD2).

5. Drive system according to one of Claims 1 to 4, wherein the first subsystem (MV-SYS) comprises: a filter inductor (FT) and a brake actuator (B-STELL), and
the second subsystem (LV-SYS) does not comprise: a battery actuator (BAT-STELL) and a filter inductor (FT).

6. Drive system according to one of Claims 1 to 5, having a circuit arrangement with which, in order to drive the vehicle, the second DC link (DC-ZK) is optionally able to be connected to the first (BAT1) or the second (BAT2) electrical energy store, and the first DC link (DC-ZK) is able to be simultaneously connected to the respective other electrical energy store (BAT1, BAT2) via the battery actuator (BAT-STELL).

7. Drive system according to one of Claims 1 to 5, having a circuit arrangement with which, in order to drive the vehicle, alternatively
the second DC link (DC-ZK) is able to be connected to the first (BAT1) and the second (BAT2) electrical energy store simultaneously, or
the first DC link (DC-ZK), via the battery actuator (BAT-STELL), is able to be connected to the first (BAT1) and the second (BAT2) electrical energy store simultaneously, or
the first DC link (DC-ZK), via the battery actuator (BAT-STELL), and the second DC link (DC-ZK) are able to be connected to the first (BAT1) and the second (BAT2) electrical energy store simultaneously.

8. Drive system according to one of Claims 1 to 7, having a circuit arrangement with which, in order to charge the two electrical energy stores (BAT1, BAT2), optionally
- the first electrical energy store (BAT1) is charged via the first DC link (DC-ZK) and the second DC link (DC-ZK) simultaneously, or
- the second electrical energy store (BAT2) is charged via the first DC link (DC-ZK) and the second DC link (DC-ZK) simultaneously, or
- the first electrical energy store (BAT1) is charged via the first DC link (DC-ZK) and the second electrical energy store (BAT2) is charged via the second DC link (DC-ZK) simultaneously, or
- the first electrical energy store (BAT1) is charged via the second DC link (DC-ZK) and the second electrical energy store (BAT2) is charged via the first DC link (DC-ZK) simultaneously, or
- the first and second electrical energy stores (BAT1, BAT2) are charged via the first and the second DC link (DC-ZK) simultaneously.

9. Use of a drive system according to Claim 8, wherein
- firstly, the first electrical energy store (BAT1) is charged via the first DC link (DC-ZK) and the second electrical energy store (BAT2) is charged via the second DC link (DC-ZK) simultaneously,
- optionally, the first (BAT1) or the second (BAT2) electrical energy store is then charged via the first DC link (DC-ZK) and the second DC link (DC-ZK) simultaneously, and
- afterwards, the first and second electrical energy stores (BAT1, BAT2) are charged via the first and the second DC link (DC-ZK) simultaneously.

10. Use of a drive system according to Claim 8, wherein
- firstly, the first (BAT1) or the second (BAT2) electrical energy store is charged via the first DC link (DC-ZK) and the second DC link (DC-ZK) simultaneously, and
- afterwards, the first and second electrical energy stores (BAT1, BAT2) are charged via the first and the second DC link (DC-ZK) simultaneously.

11. Use of a drive system according to one of Claims 1 to 8, wherein
when the vehicle is initially accelerated, the power output to the one or more traction motors (M1, M2, M3, M4) is provided by the first (MV-SYS) and the second (LV-SYS) subsystem,
and/or
as the vehicle continues to accelerate, the power output to the one or more traction motors (M1, M2, M3, M4) is provided to a greater extent by the first subsystem (MV-SYS),
and/or
when the vehicle is driven at a constant speed or in the case of a low power output, this power output to the one or more traction motors (M1, M2, M3, M4) is provided exclusively by the second subsystem (LV-SYS).

## Revendications

1. Système de traction pour véhicule comprenant
un premier sous-système (MV-SYS) avec un premier accumulateur d'énergie électrique (BAT1) et un premier circuit intermédiaire à courant continu (DC-ZK),
un deuxième sous-système (LV-SYS) avec un deuxième accumulateur d'énergie électrique (BAT2) et un deuxième circuit intermédiaire à courant continu (DC-ZK),
dans lequel chaque circuit intermédiaire à courant continu (DC-ZK) alimente respectivement au moins un moteur de traction (M1, M2, M3, M4),
dans lequel la connexion des moteurs aux circuits intermédiaires à courant continu s'effectue au moyen de convertisseurs,
dans lequel les niveaux de tension des deux circuits intermédiaires à courant continu (DC-ZK) sont différents l'un de l'autre, et le premier sous-système (MV-SYS) pouvant fournir une puissance supérieure à celle du deuxième sous-système (LV-SYS),
dans lequel le premier circuit intermédiaire à courant continu (DC-ZK) est raccordé au premier accumulateur d'énergie électrique (BAT1) par le biais d'un actionneur de batterie (BAT-STELL) de sorte que le niveau de tension du premier circuit intermédiaire à courant continu (DC-ZK) est supérieur à celui du premier accumulateur d'énergie électrique (BAT1),
et le niveau de tension du deuxième circuit intermédiaire à courant continu (DC-ZK) est égal à celui du deuxième accumulateur d'énergie électrique (BAT2).

2. Système de traction selon la revendication 1, dans lequel
le niveau de tension du premier circuit intermédiaire à courant continu (DC-ZK) correspond à une moyenne tension, et le niveau de tension du deuxième circuit intermédiaire à courant continu (DC-ZK) correspond à une basse tension.

3. Système de traction selon l'une des revendications 1 à 2,
dans lequel
les premier (BAT1) et deuxième (BAT2) accumulateurs d'énergie électrique fournissent chacun une basse tension.

4. Système de traction selon l'une des revendications 1 à 3,
dans lequel
le premier circuit intermédiaire à courant continu (DC-ZK) alimente un premier moteur de traction (M1) d'un premier bogie moteur (TGD1) et un premier moteur de traction (M3) d'un deuxième bogie moteur (TGD2) d'un véhicule ferroviaire, et
le deuxième circuit intermédiaire à courant continu (DC-ZK) alimente un deuxième moteur de traction (M2) du premier bogie moteur (TGD1) et un deuxième moteur de traction (M4) du deuxième bogie moteur (TGD2).

5. Système de traction selon l'une des revendications 1 à 4,
dans lequel
le premier sous-système (MV-SYS) comprend : un étrangleur de filtrage (FT) et un actionneur de frein (B-STELL), et
le deuxième sous-système (LV-SYS) ne comprend pas : un actionneur de batterie (BAT-STELL) et un étrangleur de filtrage (FT).

6. Système de traction selon l'une des revendications 1 à 5, avec un agencement de circuit avec lequel, pour la traction du véhicule, le deuxième circuit intermédiaire à courant continu (DC-ZK) peut être raccordé au choix au premier (BAT1) ou au deuxième (BAT2) accumulateur d'énergie électrique, et en même temps le premier circuit intermédiaire à courant continu (DC-ZK) peut être raccordé par le biais de l'actionneur de batterie (BAT-STELL) à l'autre accumulateur d'énergie électrique (BAT1, BAT2) respectif.

7. Système de traction selon l'une des revendications 1 à 5, avec un agencement de circuit avec lequel, pour la traction du véhicule, le deuxième circuit intermédiaire à courant continu (DC-ZK) peut être raccordé en même temps au premier (BAT1) et au deuxième (BAT2) accumulateur d'énergie électrique, ou le premier circuit intermédiaire à courant continu (DC-ZK) peut être raccordé en même temps au premier (BAT1) et au deuxième (BAT2) accumulateur d'énergie électrique par le biais de l'actionneur de batterie (BAT-STELL), ou le premier circuit intermédiaire à courant continu (DC-ZK) peut être raccordé simultanément au premier (BAT1) et au deuxième (BAT2) accumulateur d'énergie électrique par le biais de l'actionneur de batterie (BAT-STELL) et du deuxième circuit intermédiaire à courant continu (DC-ZK).

8. Système de traction selon l'une des revendications 1 à 7, avec un agencement de circuit avec lequel, pour charger les deux accumulateurs d'énergie électrique (BAT1, BAT2), au choix
- le premier accumulateur d'énergie électrique (BAT1) est chargé simultanément par le biais du premier circuit intermédiaire à courant continu (DC-ZK) et du deuxième circuit intermédiaire à courant continu (DC-ZK), ou
- le deuxième accumulateur d'énergie électrique (BAT2) est chargé simultanément par le biais du premier circuit intermédiaire à courant continu (DC-ZK) et du deuxième circuit intermédiaire à courant continu (DC-ZK), ou
- le premier accumulateur d'énergie électrique (BAT1) est chargé par le biais du premier circuit intermédiaire à courant continu (DC-ZK) et, simultanément, le deuxième accumulateur d'énergie électrique (BAT2) est chargé par le biais du deuxième circuit intermédiaire à courant continu (DC-ZK), ou
- le premier accumulateur d'énergie électrique (BAT1) est chargé par le biais du deuxième circuit intermédiaire à courant continu (DC-ZK) et, simultanément, le deuxième accumulateur d'énergie électrique (BAT2) est chargé par le biais du premier circuit intermédiaire à courant continu (DC-ZK), ou
- les premier et deuxième accumulateurs d'énergie électrique (BAT1, BAT2) sont chargés simultanément par le biais des premier et deuxième circuits intermédiaires à courant continu (DC-ZK).

9. Utilisation d'un système de traction selon la revendication 8, dans laquelle
- le premier accumulateur d'énergie électrique (BAT1) est d'abord chargé par le biais du premier circuit intermédiaire à courant continu (DC-ZK) et le deuxième accumulateur d'énergie électrique (BAT2) est chargé simultanément par le biais du deuxième circuit intermédiaire à courant continu (DC-ZK),
- facultativement, le premier (BAT1) ou le deuxième (BAT2) accumulateur d'énergie électrique est alors chargé simultanément par le biais du premier circuit intermédiaire à courant continu (DC-ZK) et du deuxième circuit intermédiaire à courant continu (DC-ZK), et
- ensuite, les premier et deuxième accumulateurs d'énergie électrique (BAT1, BAT2) sont chargés simultanément par le biais des premier et deuxième circuits intermédiaires à courant continu (DC-ZK).

10. Utilisation d'un système de traction selon la revendication 8, dans laquelle
- tout d'abord, le premier (BAT1) ou le deuxième (BAT2) accumulateur d'énergie électrique est chargé simultanément par le biais du premier circuit intermédiaire à courant continu (DC-ZK) et du deuxième circuit intermédiaire à courant continu (DC-ZK), et
- ensuite, les premier et deuxième accumulateurs d'énergie électrique (BAT1, BAT2) sont chargés simultanément par le biais des premier et deuxième circuits intermédiaires à courant continu (DC-ZK).

11. Utilisation d'un système de traction selon l'une des revendications 1 à 8, dans laquelle
lors de l'accélération initiale du véhicule, la puissance délivrée au(x) moteur(s) de traction (M1, M2, M3, M4) est fournie par le premier (MV-SYS) et le deuxième (LV-SYS) sous-système,
et/ou
lors de la poursuite de l'accélération du véhicule, la puissance délivrée au(x) moteur(s) de traction (M1, M2, M3, M4) est fournie dans une plus large mesure par le premier sous-système (MV-SYS),
et/ou
lorsque le véhicule roule à vitesse constante ou à faible puissance, cette puissance est fournie au(x) moteur(s) de traction (M1, M2, M3, M4) exclusivement par le biais du deuxième sous-système (LV-SYS).
